# EUROPÄISCHE PATENTSCHRIFT

(11) **EP 1 472 031 B1**
(45) Veröffentlichungstag und Bekanntmachung des Hinweises auf die Patenterteilung: **24.05.2006**
(21) Anmeldenummer: 03700285.4
(22) Anmeldetag: 24.01.2003
(51) Int. Cl.: B23C 3/18

(54) **VERFAHREN UND VORRICHTUNG ZUR RUNDUM-BEARBEITUNG EINES ROHLINGS IN EINER BEARBEITUNGSMASCHINE RESP. FRÄSMASCHINE**
METHOD AND DEVICE FOR THE ALL-ROUND MACHINING OF A BLANK IN A MACHINING DEVICE IN PARTICULAR A MILLING MACHINE
PROCEDE ET DISPOSITIF D'USINAGE CIRCULAIRE D'UNE EBAUCHE SUR UNE MACHINE D'USINAGE, NOTAMMENT SUR UNE FRAISEUSE

(30) Priorität: 31.01.2002 CH 169022002
(43) Veröffentlichungstag der Anmeldung: 03.11.2004
(73) Patentinhaber: Alstom Technology Ltd, 5400 Baden (CH)
(72) Erfinder: KILLER, Franz, 5272 Gansingen (CH); SCHERER, Josef, 60529 Frankfurt (DE)
(86) Internationale Anmeldenummer: PCT/CH2003/000059
(87) Internationale Veröffentlichungsnummer: WO 2003/064089

(56) Entgegenhaltungen:
- EP-A- 0 659 520
- EP-A- 0 827 807
- CH-A- 686 878

## Beschreibung

### TECHNISCHES GEBIET

Die vorliegende Erfindung betrifft Verfahren zur Rundum-Bearbeitung von Rohlingen oder vorbearbeiteten Werkstücken mit einer Bearbeitungsmaschine wie beispielsweise einer Fräsmaschine zu in ihrer dreidimensionalen Form abschließend bearbeiteten Bauteilen sowie eine Bearbeitungsmaschine wie beispielsweise eine Fräsmaschine zur Durchführung eines derartigen Verfahrens.

### STAND DER TECHNIK

Im Bereich der Herstellung von Turbinenschaufeln wird üblicherweise mit einer Mehrspindelbearbeitung gearbeitet. Dies bedeutet, dass ein Rohling zunächst einer groben Vorbearbeitung unterzogen wird, anschließend der Blattbereich im Detail ausgearbeitet wird, dann der Kopf und zuletzt der Fuß gefertigt wird. Zwischen diesen einzelnen Bearbeitungsschritten muss das Werkstück jeweils von Hand oder durch einen Roboter umgespannt werden, dies weil sowohl häufig die Fräsmaschinen nur in der Lage sind, einzelne Bearbeitungsschritte durchzuführen, und insbesondere weil jede Fassung respektive Halterung des Werkstückes immer nur die Bearbeitung eines bestimmten Bereichs erlaubt. Diese Art der Fertigung wird üblicherweise als sogenannte "Kistenfertigung" bezeichnet, da üblicherweise jeweils eine Maschine für einen bestimmten Bearbeitungsschritt verantwortlich zeichnet, und weil nach jedem Bearbeitungsschritt das Werkstück in einer Kiste zwischengelagert wird.

Problematisch an einer derartigen Fertigung ist unter anderem die Tatsache, dass die Geschwindigkeit einer solchen Fertigungsstraße stets von der Geschwindigkeit des langsamsten Bearbeitungsschrittes bestimmt wird. Außerdem erfordert die Vielzahl von Transferprozessen von Werkstücken zwischen den einzelnen Einheiten wie Fräsmaschinen, Messstation, Waschstationen etc. aufwändige Einrichtungen und führt zu erheblichen Zeitverlusten im Herstellungsprozess.

Die EP-A-0827807 beschreibt ein Verfahren, bei welchem ein in Form eines Stabes zugeführter und am frei schwebenden Ende zusätzlich in einer Halterungsvorrichtung gehaltener Rohling bearbeitet wird. Um den bei der Halterung am frei schwebenden Ende nicht zugänglichen Bereich abschließend bearbeiten zu können, wird für einen zweiten Bearbeitungsschritt, unter Verwendung der gleichen Halterungsvorrichtung, wie sie bereits im ersten Schritt verwendet wurde, das Werkstück mit einem Klemmspannkopf im bereits bearbeiteten Bereich am frei schwebenden Ende gegriffen, wobei das andere, mit dem Stab verbundene Ende des Werkstückes in diesem zweiten Schritt aber in der gleichen Halterung verbleibt wie während des ersten Schrittes. Im zweiten Bearbeitungsschritt wird anschließend das nicht dem Stab zugewandte Ende des Werkstückes fertig bearbeitet.

### DARSTELLUNG DER ERFINDUNG

Es ist daher Aufgabe der vorliegenden Erfindung, ein Verfahren sowie eine Vorrichtung zur Rundum-Bearbeitung eines Rohlings mit einer einzigen Bearbeitungsmaschine wie beispielsweise einer Fräsmaschine zur Verfügung zu stellen, welches die Fertigung des einsatzfertigen Bauteils in möglichst wenigen Bearbeitungsschritten und Aufspannungen ermöglicht. Die Bearbeitungsmaschine ist dabei in der Lage, unterschiedliche Operationen wie Fräsen, Bohren, Drehen und/oder Erodieren etc. durchzuführen. Der Begriff einer Fräsmaschine ist in diesem Zusammenhang somit weit auszulegen, d.h. bezieht sich auf Bearbeitungsmaschinen, welche nicht nur zu fräsen in der Lage sind, sondern ggf. auch drehen, bohren, erodieren, schleifen, härten etc. können.

Die vorliegende Erfindung löst diese Aufgabe, indem der Rohling in einem ersten Bearbeitungsschritt von wenigstens einem Spannadapter gehalten wird und von der Bearbeitungsmaschine/Fräsmaschine ein erster Bereich in seine endgültige, der bestimmungsgemäßen Verwendung entsprechende Teilform gebracht wird, und anschließend in einem zweiten Bearbeitungsschritt der teilbearbeitete Rohling von wenigstens einem Sonderspannadapter im ersten, endgültig bearbeiteten Bereich gehalten wird und der übrige Bereich von derselben Bearbeitungsmaschine/Fräsmaschine in seine endgültige, der bestimmungsgemäßen Verwendung entsprechende Gesamtform gebracht wird.

Gegenstand der Erfindung ist folglich ein Verfahren gemäß dem Hauptanspruch sowie eine Bearbeitungsmaschine/Fräsmaschine gemäss Anspruch 11 sowie eine Verwendung dieser Bearbeitungsmaschine/Fräsmaschine gemäss Anspruch 20.

Der Kern der Erfindung besteht darin, den Rohling im ersten Schritt derart zur Bearbeitung zu Haltern, respektive im Bearbeitungsraum der Bearbeitungsmaschine resp. Fräsmaschine mit Hilfe eines Adapters derart zu befestigen, dass jener Bereich des Werkstückes, welcher nicht infolge der Befestigung durch den Adapter verdeckt, respektive der Bearbeitung durch die Bearbeitungsmaschine resp. Fräsmaschine unzugänglich ist, im ersten Bearbeitungsschritt bereits in seine endgültige, der bestimmungsgemäßen Verwendung entsprechende, dreidimensionale Form bearbeitet wird. Dies ermöglicht in der Folge, dass das Werkstück mit Hilfe eines weiteren Sonderspannadapters, welcher das Werkstück an bestimmten, bereits endgültig bearbeiteten Zonen greift, und welcher auf der gleichen Grundeinheit der Gegenstand der Erfindung ist folglich ein Verfahren gemäß dem Hauptanspruch sowie eine Bearbeitungsmaschine/Fräsmaschine gemäss Anspruch 11 sowie eine Verwendung dieser Bearbeitungsmaschine/Fräsmaschine gemäss Anspruch 20.

Der Kern der Erfindung besteht darin, den Rohling im ersten Schritt derart zur Bearbeitung zu Haltern, respektive im Bearbeitungsraum der Bearbeitungsmaschine resp. Fräsmaschine mit Hilfe eines Adapters derart zu befestigen, dass jener Bereich des Werkstückes, welcher nicht infolge der Befestigung durch den Adapter verdeckt, respektive der Bearbeitung durch die Bearbeitungsmaschine resp. Fräsmaschine unzugänglich ist, im ersten Bearbeitungsschritt bereits in seine endgültige, der bestimmungsgemäßen Verwendung entsprechende, dreidimensionale Form bearbeitet wird. Dies ermöglicht in der Folge, dass das Werkstück mit Hilfe eines weiteren Sonderspannadapters, welcher das Werkstück an bestimmten, bereits endgültig bearbeiteten Zonen greift, und welcher auf der gleichen Grundeinheit der Bearbeitungsmaschine resp. Fräsmaschine beweglich gelagert ist, zur Weiterbearbeitung befestigt werden kann. Die Befestigung muss dabei selbstverständlich derart geschehen, dass der gesamte noch unbearbeitete Bereich des teilbearbeiteten Rohlings der endgültigen Weiterbearbeitung durch die gleiche Bearbeitungsmaschine resp. Fräsmaschine uneingeschränkt zugänglich ist. So ist es dann möglich, dass im zweiten Bearbeitungsschritt auf der gleichen Bearbeitungsmaschine resp. Fräsmaschine ohne ein weiteres Umspannen der teilbearbeitete Rohling endgültig in seine gesamte dreidimensionale Form gebracht werden kann.

Dies ist durchaus überraschend, denn die einzelnen Bearbeitungsschritte umfassen Fräsoperationen wie unter anderem auch Schruppen und Schlichten, welche erhebliche Kräfte auf das Werkstück ausüben und welche den Fachmann bisher immer davon abgehalten haben, das Werkstück in nur zwei Aufspannungen auf einer einzigen Maschine in seine endgültige Form zu bringen. Üblicherweise wurde immer davon ausgegangen, dass die bei der Bearbeitung entstehenden Kräfte entweder zu einer Schädigung des Werkstückes oder zu einer ungenügenden Qualität des endgültigen Werkstücks führen (z. B. infolge von Vibrationen, Momenten etc.). Es zeigt sich nun aber, dass es möglich ist, in einem ersten Bearbeitungsschritt bereits Funktionsflächen in ihre endgültige Form zu bringen, und nun eben diese Funktionsflächen sofort zur Halterung für den zweiten Bearbeitungsschritt zu verwenden, und den zweiten Bearbeitungsschritt mit derselben Bearbeitungsmaschine resp. Fräsmaschine durchzuführen.

Die Einsparung von Aufspannungen und die Verwendung nur einer Bearbeitungsmaschine resp. Fräsmaschine führt zu einer erheblichen Vereinfachung des Herstellungsprozesses, zur Einsparung von Kosten (weniger Standzeiten, weniger Mittel zum Transfer von Bauteilen, weniger Fräsmaschinen etc.) und erlaubt trotzdem die Herstellung von endgültigen Formen, welche höchsten Qualitätsansprüchen gerecht wird. Die direkte Übergabe vom Adapter für den ersten Bearbeitungsschritt zum Sonderspannadapter für den zweiten Bearbeitungsschritt ohne Verwendung eines Roboters erlaubt in ganz besonders einfacher, definierter Weise die Übergabe von einer Aufspannung in die nächste, was zu einer Reduktion der notwendigen Justierungen führt. Definierte Weise heißt in diesem Zusammenhang, dass die Mittel zur Entnahme des teilbearbeiteten Werkstückes, d. h. die Sonderspannadapter, dieses an einer wohldefinierten Stelle greifen, sodass das teilbearbeitete Werkstück anschließend in ebenso wohldefinierter Position im zweiten Bearbeitungsschritt fertig bearbeitet werden kann. Die effektive Ausgestaltung des Sonderspannadapters (Abstand und Art der Fassungspunkte) hängt somit in der Regel von der Kontur des teilbearbeiteten Bereiches des Werkstückes ab.

Bei der bestimmungsgemässen Gesamtform, welche mit dem vorgeschlagenen Verfahren erzielt werden kann, handelt es sich um ein beliebiges Bauteil, welches aus einem Rohling durch die genannten Operationen erhalten werden kann. Besonders geeignet ist das Verfahren für die Herstellung von Bauteilen, wie sie in einer Turbine (Dampfturbine oder Gasturbine) Verwendung finden. So handelt es sich bevorzugt beim Bauteil um eine Lauf- oder Leitschaufel einer Turbine.

Gemäss einer ersten bevorzugten Ausführungsform der Erfindung handelt es sich beim Rohling um einen Rohling aus Metall oder einem Keramikwerkstoff in Form eines rechteckigen oder zylindrischen oder polyeder-förmigen, insbesondere bevorzugt quaderförmigen Blockes oder um einen Guss- oder Schmiederohling. Ebenfalls möglich ist es, den Rohling in einer bereits vorbearbeiteten Form dem erfindungsgemässen Verfahren zuzuführen. Überraschenderweise gelingt das erfindungsgemässe Verfahren auch bei derart schwierig zu bearbeitenden Werkstoffen, und dies ohne Einbuße der Qualität der endgültigen Formteile.

Gemäß einer weiteren bevorzugten Ausführungsform der Erfindung handelt es sich bei der Teilform um eine Form unter Belassung von unbearbeiteten Überständen am Kopf-und am Fußteil, wobei insbesondere bevorzugt bereits beim ersten Bearbeitungsschritt Einschnitte zwischen den Überständen und der Teilform vorgesehen werden. Als geeignet erweist sich das vorgeschlagene Verfahren z. B. zur Herstellung von Leit- oder Laufschaufeln oder Turbinenschaufeln, wobei es sich bei der Teilform in diesem Fall um den Kopf der Schaufel, den Blattbereich der Schaufel und den Fuß der Schaufel handelt, und wobei am Kopf und am Fuß nach dem ersten Bearbeitungsschritt vom Spannadapter gefasste Überstände stehenbleiben, welche anschließend im zweiten Bearbeitungsschritt entfernt werden.

Gemäß einer weiteren bevorzugten Ausführungsform der Erfindung wird das Werkstück in beiden Bearbeitungsschritten von einer einzigen, in drei Raumrichtungen (X,Y,Z) verschiebbaren, und eine drehbare Spindel zur Halterung eines Bearbeitungswerkzeugs tragenden Frässpindel bearbeitet.

Insbesondere bei großen Rohlingen erweist es sich als vorteilhaft, nicht nur einen Spannadapter vorzusehen, sondern zwei, zwischen welchen das Werkstück eingespannt wird. Entsprechend wird gemäß einer anderen bevorzugten Ausführungsform der Erfindung das Werkstück im ersten Bearbeitungsschritt in zwei den Rohling kopf- und fußseitig greifenden Spannadaptern gehalten, und es wird der erste Bereich im freiliegenden Bereich zwischen den beiden Spannadaptern ausgearbeitet, wobei bevorzugt die Spannadapter von zwei Halterungsschlitten derart geführt werden, dass das Werkstück in Bezug auf eine das Werkstück bearbeitende Frässpindel entlang einer ersten Achse verschoben und um diese erste Achse gedreht werden kann. Die Drehbarkeit des Werkstückes um die erste Achse weist den Vorteil auf, dass das Werkstück von der Frässpindel auch einer Drehbearbeitung unterzogen werden kann. Die Verschiebbarkeit entlang dieser ersten Achse führt dazu, dass bei gleichzeitiger gegenläufiger Verschiebung von Frässpindel und Halterungsschlitten hohe Relativgeschwindigkeiten von Bearbeitungswerkzeug und Werkstück möglich sind, ohne dass das Werkstück oder das Bearbeitungswerkzeug allein mit entsprechend höherer Geschwindigkeit verschoben werden muss.

In Bezug auf die Drehbarkeit um diese erste Achse kann diese insbesondere bevorzugt für die beiden Spannadapter unabhängig voneinander ausgestaltet sein. Dies bedeutet, dass die beiden Spannadapter auf den Halterungsschlitten mit unterschiedlichen Geschwindigkeiten sowie gegenläufig oder gleichläufig angesteuert werden können. Der Vorteil einer derartigen unabhängigen Drehbarkeit der beiden Spannadapter, welche sich grundsätzlich, und unabhängig vom vorliegenden Verfahren als unerwartet praktisch erweist, liegt darin begründet, dass das Werkstück, nachdem es von beiden Seiten mit den Spannadaptern gefasst wurde, durch eine leichte gegenläufige Drehung der beiden Spannadapter verspannt werden kann, was zu einer besseren Halterung des Werkstückes in den Spannadaptern führt. Dieser Verspannungszustand kann elektronisch registriert werden und während des gesamten weiteren ersten Bearbeitungsschrittes beibehalten werden, oder aber auch gegebenenfalls nachkorrigiert respektive erhöht werden. Die entsprechend anliegende Torsion auf dem Werkstück kann im Programm zur elektronischen Steuerung der Frässpindel berücksichtigt und korrigiert werden.

Um auch den zweiten Bearbeitungsschritt in derselben Bearbeitungsmaschine resp. Fräsmaschine unter Verwendung derselben Frässpindel einfach zu ermöglichen, kann gemäß einem weiteren Ausführungsbeispiel des vorliegenden Verfahrens nach dem ersten Bearbeitungsschritt mit der Frässpindel der teilbearbeitete Rohling von wenigstens einem Sonderspannadapter automatisch im ersten, endgültig bearbeiteten Bereich gegriffen werden, das heißt es ist kein Roboter zum Umspannen notwendig. Der wenigstens eine Spannadapter wird anschließend gelöst und aus dem Arbeitsbereich der Frässpindel gefahren, um beim zweiten Bearbeitungsschritt nicht zu stören. Der teilbearbeitete Rohling wird dann unter Halterung im Sonderspannadapter von der gleichen Frässpindel in seine endgültige, der bestimmungsgemäßen Verwendung entsprechende Gesamtform gebracht, d. h. die Überstände, welche zur Halterung in den Adaptern während des ersten Bearbeitungsschrittes gedient hatten, werden nun im zweiten Bearbeitungsschritt entfernt und z.B. im Fall einer Turbinenschaufel Kopf-und Fußpartie in die endgültige Form gebracht. Dabei erweist es sich als vorteilhaft, den wenigstens einen Sonderspannadapter auf wenigstens einer, um eine zweite Achse drehbaren Wippe zu befestigen, welche Wippe ihrerseits auf einer Wippenschlitteneinheit angeordnet ist, welche entlang einer dritten Achse verschiebbar, und um diese dritte Achse drehbar gelagert ist, wobei gegebenenfalls außerdem die Wippe senkrecht zu dieser dritten Achse verschiebbar ist. Eine derart ausgestaltete Wippe erlaubt auf der einen Seite das direkte automatisierte umspannen vom Adapter für den ersten Bearbeitungsschritt auf den Sonderspannadapter für den zweiten Bearbeitungsschritt, auf der anderen Seite ermöglicht sie durch ihre Beweglichkeit die Durchführung des zweiten Bearbeitungsschrittes durch dieselbe Frässpindel, da die Wippe in der Lage ist, dass teilbearbeitete Werkstück im Bearbeitungsbereich der Frässpindel beweglich zu haltern. Der üblicherweise vorhandene Zwischenschritt, das Werkstück mit Hilfe eines Roboters von einer Halterung in eine zweite zu transferieren entfällt dadurch vollständig. Wie schon bei der Halterung in den Adaptern während des ersten Bearbeitungsschrittes kann auch hier vorteilhafter Weise die Drehbarkeit der Wippe um die zweite Achse bei Verwendung von zwei Wippen unabhängig voneinander einstellbar sein, sodass auch für den zweiten Bearbeitungsschritt das Werkstück durch eine leichte gegenläufige Drehung der zwei Wippen gegeneinander verspannt und gut fixiert werden kann.

Gemäß einer anderen bevorzugten Ausführungsform der Erfindung kann die endgültige Gesamtform nach dem ersten und oder dem zweiten Bearbeitungsschritt gereinigt und/oder vermessen und/oder nach dem zweiten Schritt verpackt werden. Die entsprechenden Mittel zur Durchführung dieser Schritte, welche übrigens auch die Anbringung eines Material- respektive Bauteil-Materialcode umfassen können, können entweder auf der gleichen Bearbeitungsmaschine resp. Fräsmaschine durchgeführt werden, sie können aber auch in einem nachgeschalteten Schritt auf anderen Einheiten realisiert werden. Ebenfalls ist es möglich, vor der Bearbeitung den Rohling durch eine Materialcodelesestation zu schleusen, welche entweder separat oder als Teil der Bearbeitungsmaschine resp. Fräsmaschine ausgestaltet werden kann. Diese Materialcodelesestation dient der Zuweisung eines bestimmten NC-Programms zur Steuerung des Bearbeitungsprozesses.

Das vorliegende Verfahren erweist sich als besonders geeignet für die Herstellung von Leit- oder Laufschaufeln oder von Turbinenschaufeln mit oder ohne Deckband. Insbesondere bei der Herstellung von großen derartigen Komponenten mit einer Oberfläche im Bereich von N4 bis N5 bei Toleranzen von + - 0,002 mm, einer Länge von im Bereich von 120 bis 2400 mm bei einem rotierenden Durchmesser von 50 bis 400 mm und einem Gewicht von 10 bis 400 kg kann das vorliegende Verfahren in einer einzigen Bearbeitungsmaschine resp. Fräsmaschine angewendet werden ohne dass dabei Probleme der Stabilität (trotz großer Hebel) oder der Zugänglichkeit durch den Bearbeitungskopf auftreten.

Weitere bevorzugte Ausführungsformen des erfindungsgemässen Verfahrens sind in den abhängigen Ansprüchen beschrieben.

Wie bereits eingangs erwähnt, betrifft die vorliegende Erfindung außerdem eine Bearbeitungsmaschine resp. Fräsmaschine zur Durchführung eines Verfahrens, wie es oben beschrieben wird. Diese Bearbeitungsmaschine resp. Fräsmaschine ist durch die Merkmale von Anspruch 11 gekennzeichnet, nämlich u.a. dass sie eine in drei Raumrichtungen verschiebbare Frässpindel aufweist, mit welcher das Werkstück in einem Bearbeitungsbereich bearbeitet werden kann, dass die Bearbeitungsmaschine resp. Fräsmaschine wenigstens einen Halterungsschlitten aufweist, mit welchem das Werkstück für den ersten Bearbeitungsschritt in Spannadaptern gehaltert werden kann, und dass weiterhin die Bearbeitungsmaschine resp. Fräsmaschine wenigstens eine Wippe aufweist, mit welcher das teilbearbeitete Werkstück mit wenigstens einem Sonderspannadapter im ersten, endgültig bearbeiteten Bereich des Werkstücks für den zweiten Bearbeitungsschritt gehaltert werden kann. Vorteilhafter Weise ist dabei die Frässpindel auf der einen Seite der Halterungsschlitten angeordnet, während die Wippe auf der anderen Seite der Halterungsschlitten angeordnet ist. So kann der wenigstens eine Halterungsschlitten bei der Bearbeitung unter Halterung in der Wippe im zweiten Bearbeitungsschritt einfach aus dem Bearbeitungsbereich der Frässpindel gefahren werden.

Typischerweise verfügt dabei die Frässpindel über eine auf hinteren, auf dem Grundgestell angeordnete Führungsbahnen in X-Richtung verschiebbare Grundschlitteneinheit, über eine auf dieser Grundschlitteneinheit in Y-Richtung verschiebbare Y-Schlitteneinheit, und über eine auf der Y-Schlitteneinheit in Z-Richtung verschiebbare Z-Schlitteneinheit sowie über eine in der Z-Schlitteneinheit um eine Rundachse drehbare, das Bearbeitungswerkzeug tragende UNI-Spindel. Für die Bearbeitung insbesondere von Schaufeln der oben angegebenen Größe sollte dabei die Frässpindel entlang der X-Richtung um +/- 1000 bis 1200 mm, sowie entlang der Y-Richtung um +/- 300 bis 350 mm und entlang der Z-Richtung um + 900 bis 1000 und - 90 bis 110 mm verschoben werden können, dies bezogen auf den Nullpunkt der Maschinenanordnung, wobei insbesondere bevorzugt die UNI-Spindel um +/- 90 bis 100 Grad um die Rundachse drehbar ist.

Gemäß einer anderen bevorzugten Ausführungsform der erfindungsgemässen Bearbeitungsmaschine resp. Fräsmaschine sind zwei Halterungsschlitten angeordnet, welche das Werkstück im ersten Bearbeitungsschritt in zwei den Rohling kopf- und fußseitig greifenden Spannadaptern halten. Dabei werden bevorzugt die Spannadapter von den zwei Halterungsschlitten derart geführt, dass das Werkstück in Bezug auf die das Werkstück bearbeitende Frässpindel entlang einer ersten Achse verschoben und um diese erste Achse gedreht werden kann, und dabei insbesondere bevorzugt die Drehung um die erste Achse der beiden Spannadapter unabhängig voneinander, synchron oder asynchron, mit ungleicher oder gleicher Rotationsgeschwindigkeit, geschehen kann. Besonders einfach und praktisch, d. h. kompakt und mit großer relativer Beweglichkeit, wird bevorzugt die Verschiebungsachse der Halterungsschlitten parallel zur X-Richtung der Frässpindel angeordnet. Um wiederum in der Lage zu sein, insbesondere große Schaufeln wie sie oben genannt werden, bearbeiten zu können, sollten die Halterungsschlitten entlang der ersten Achse um jeweils + respektive - 130 bis 170 mm (bezogen auf den linken respektive rechten Halterungsschlitten) und um jeweils - respektive + 1100 bis 1600 mm (bezogen auf den linken respektive rechten Halterungsschlitten) auf der Grundeinheit verschoben werden können, und die Rotation um die erste Achse endlos ausgebildet sein.

Die Bearbeitungsmaschine resp. Fräsmaschine nach der Erfindung zeichnet sich dadurch aus, dass der wenigstens eine Sonderspannadapter derart ausgebildet ist, dass er das in den Spannadaptern gehaltene, teilbearbeitete Werkstück automatisch greifen kann, und dass der wenigstens eine Halterungsschlitten aus dem Bearbeitungsbereich der Frässpindel verschoben werden kann, wobei bevorzugt der wenigstens eine Sonderspannadapter auf wenigstens einer, um eine zweite Achse drehbaren Wippe befestigt ist, welche Wippe ihrerseits auf einer Wippenschlitteneinheit angeordnet ist, welche entlang einer dritten Achse verschiebbar, und um diese dritte Achse drehbar gelagert ist, wobei außerdem die Wippe senkrecht zu dieser dritten Achse verschiebbar ist. Wie bereits oben erwähnt, ist die Drehbarkeit um die zweite Achse bei Anwesenheit von zwei Wippen vorteilhafter Weise unabhängig ausgestaltet, sodass das Werkstück auch für den zweiten Bearbeitungsschritt durch leichte Gegendrehung verspannt werden kann. In Bezug auf die Anordnung der Achse relativ zueinander sei erwähnt, dass die zweite Achse der Wippe vorteilhafter Weise parallel zur X-Richtung der Frässpindel angeordnet ist, und/oder dass die dritte Achse parallel zur X-Richtung der Frässpindel angeordnet ist. Um beispielsweise große Schaufeln, wie sie oben erwähnt werden, bearbeiten zu können, sollte die Wippe um die zweite Achse um +/- 50 bis 60 Grad drehbar sein, die Wippenschlitteneinheiten entlang der dritten Achse um + respektive - 1200 bis 1800 mm und um - respektive + 80 bis 120 mm (bezogen auf die linke respektive rechte Wippenschlitteneinheit) verschiebbar und um diese Achse um + 50 bis 60 Grad drehbar sein, und die Wippe senkrecht zur dritten Achse um - 50 bis 60 mm respektive + 140 bis 150 mm verschiebbar sein.

Weitere bevorzugte Ausführungsformen der erfindungsgemässe Bearbeitungsmaschine resp. Fräsmaschine sind in den abhängigen Patentansprüchen beschrieben.

Die vorliegende Erfindung betrifft außerdem eine Verwendung einer Vorrichtung respektive eines Verfahrens, wie es oben beschrieben ist, zur Herstellung einer Leit- oder Laufschaufel oder Turbinenschaufel, insbesondere einer Turbinenschaufel mit oder ohne Deckband mit einer Oberfläche im Bereich von N4 bis N5 bei Toleranzen von + - 0,002 mm, einer Länge von im Bereich von 120 bis 2400 mm bei einem rotierenden Durchmesser von 50 bis 400 mm und einem Gewicht von 10 bis 400 kg.

### KURZE ERLÄUTERUNG DER FIGUREN

Die Erfindung soll nachfolgend anhand von Ausführungsbeispielen im Zusammenhang mit den Figuren näher erläutert werden. Es zeigen
- Fig. 1: eine Fräsmaschine mit 21 Achsen in perspektivischer Ansicht;
- Fig. 2: eine weitere Ansicht der Fräsmaschine gemäß Fig. 1 mit detaillierter Sichtbarkeit der Wippen ;
- Fig. 3: Detailansicht der Fräsmaschine gemäß Fig. 1 des Bearbeitungsbereichs bei in Halterungsschlitten eingespanntem Werkstück (Turbinenschaufel mit besonderem Adapter für Guss- oder Schmiedeschaufeln);
- Fig. 4: Ansicht der Fräsmaschine gemäß Fig. 1 bei Stellung im Maschinennullpunkt ;
- Fig. 5: Ansicht eines eingespannten Rohlings ;
- Fig. 6: seitliche Ansicht einer teilweise fertiggestellten Schaufel eingespannt in den Spannadapter ; und
- Fig. 7: seitliche Ansicht einer teilweise fertiggestellten Schaufel eingespannt auf der NC-Wippe.

### WEGE ZUR AUSFÜHRUNG DER ERFINDUNG

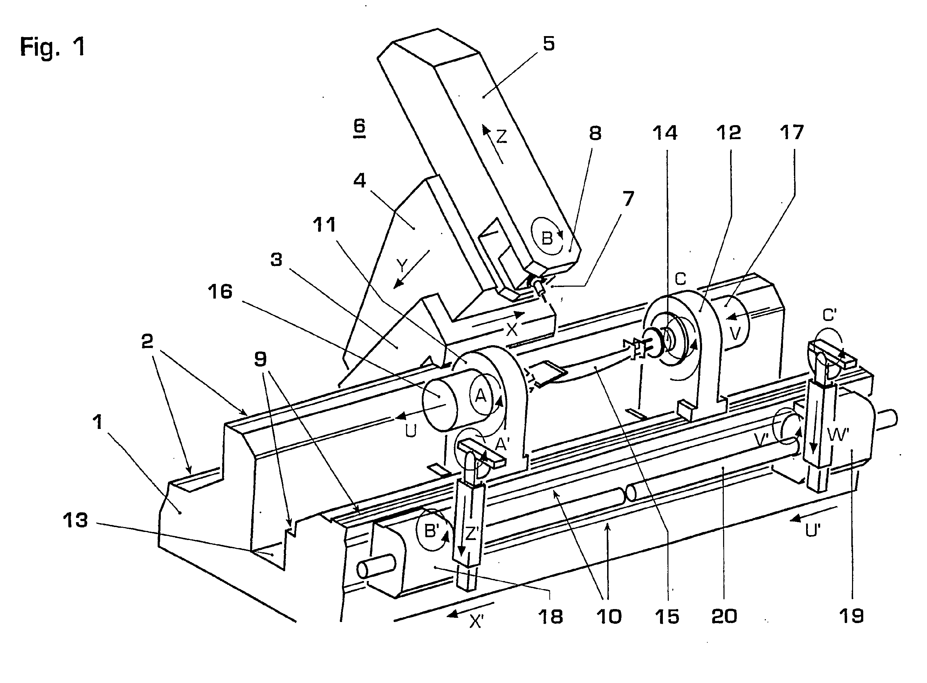

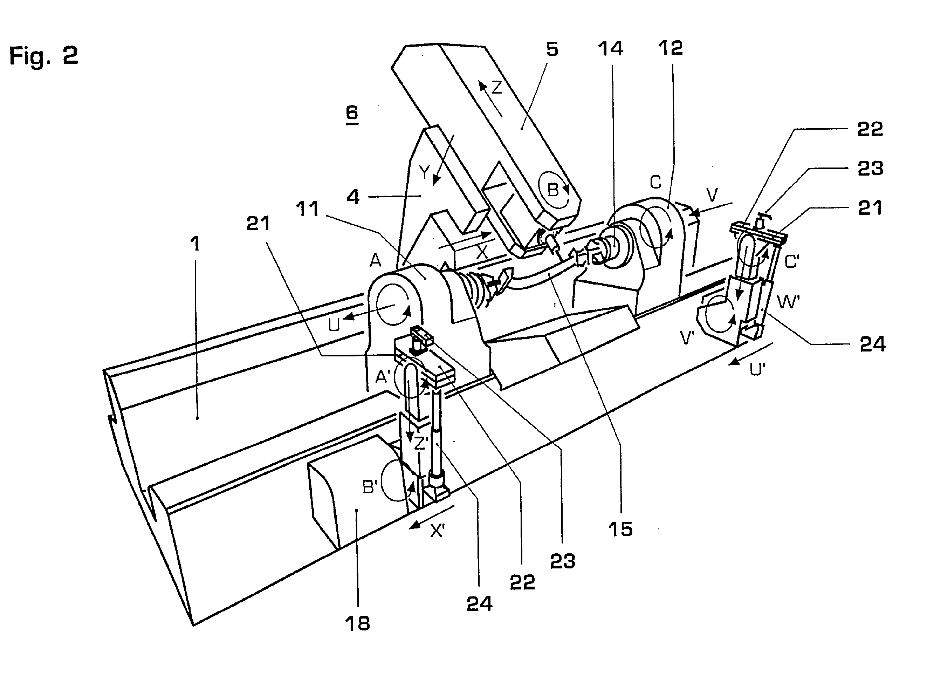

Fig. 1 und 2 zeigen eine Schaufelfräsmaschine in perspektivischer Ansicht. Die Fräsmaschine weist ein Grundgestell 1 auf, auf welchem die einzelnen Elemente gelagert sind. Auf dem Grundgestell 1 sind auf der hinteren Seite die beiden Führungsbahnen 2 für die Grundschlitteneinheit 3 der UNI-Frässpindel 7 unter einem definierten Winkel angebracht. Im mittleren Bereich sind die beiden Führungsbahnen 9 für die A-Achsenschlitten 11 und 12 angebracht. Die Führungsbahnen 10 für die beiden Wippen 21 sind vorne angebracht. Zwischen den Führungsbahnen 2 und 9 ist der Spänekanal 13 integriert. Um keine Schwächung des Gestells zu erhalten, wurde dieser Querverrippt. Auf der Grundschlitteneinheit 3 der UNI-Frässpindel 7, die den X-Hub (X) der Spindel durchführt, ist die Y-Schlitteneinheit 4 der UNI-Frässpindel 7 montiert, mit der der Y-Hub (Y) der Spindel gefahren wird. Der Z-Ram 5 ist um 90 Grad zum Y-Hub auf dem Y-Schlitten 4 montiert. Mit ihm fährt die Spindel den Z-Hub (Z). Die UNI-Spindel 7 selbst ist in einer Rundachse 8 montiert, mit der sie um +/- 110 Grad geschwenkt werden kann.

Für reine Dreharbeit ist in der Flanschpartie der Schnelllaufspindel ein festes Werkzeugaufnahmesystem wie z. B. eine HSK-Schnittstelle angebracht. Mit den beiden Schaufel-Rotationsachsen 16 und 17 der beiden Halterungsschlitten 11 und 12 um die Achsen A respektive C, können die geklemmten Schaufeln sowohl im Drehbetrieb als auch im NC-Betrieb gefahren werden. Sie bilden die beiden Schaufeldrehachsen A und C. Zur Aufnahme von Spannadaptern sind diese Drehachsen mit einer Standard-HSK Schnittstelle ausgelegt. Die beiden Schaufel-Rotationsachsen 16 und 17 sind auf den beiden Rotationslinearschlitten 11 und 12 montiert, durch die sie die Linearbewegungen U und V durchführen können.

Die beiden NC-Linear-Achsen U und V können, wenn benötigt, als GANTRY-Achsen betrieben werden. Für höhere Vorschubgeschwindigkeiten wird die X-Linear-Achse der Frässpindel 6 entgegen den beiden NC-Linear-Achsen U und V betrieben, um sowohl die Beschleunigungsrampen zu halbieren, als auch die Fräsmaximalgeschwindigkeit verdoppeln zu können.

Die UNI-Motorspindel selbst ist in einer Rundachse 8 integriert und durch Schnellspannsysteme fixiert. Die Energie- und Signalübertragung von der Maschine zur UNI-Motorspindel 7 erfolgt über eine sogenannte Steckschnittstelle.

Auf der Stirnseite sind die beiden Wippenschlitteneinheiten 18 und 19 montiert, die die beiden Linearbewegungen X' und U' durchführen. Auf ihnen sind die beiden Stößelkippachsen B' und V' montiert, die die Stößel und somit die Wippe 21 mit ihren Sonderspannadaptern 22 in die gewünschte Lage kippen können. Die beiden Stößel machen die Linearbewegungen Z' und W', um die richtigen Ausfahrpunkte zu erreichen.

Auf den Stößeln sind die beiden NC-Wippen 21 montiert, die die Dreh- bzw. Einstellbewegungen A' und C' machen.

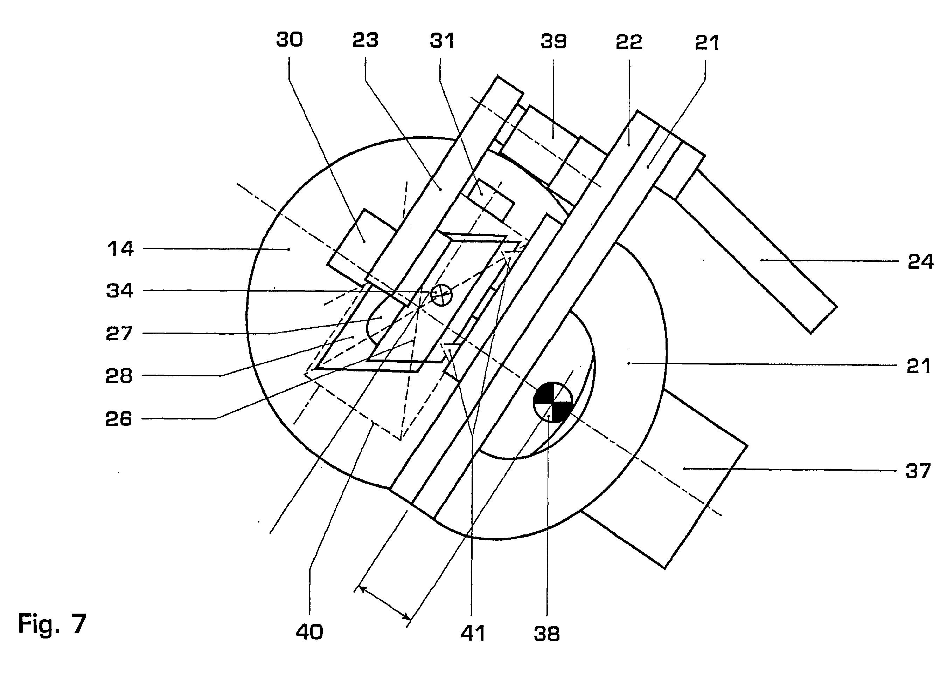

Auf ihnen sind die beiden Sonderspannadapter 22 zur Aufnahme der teilweise fertig gefrästen Schaufeln in den fertigen Bereichen montiert, die hydraulisch klemmen (vgl. dazu insbesondere Fig. 7).

Zum Wechseln der Sonderspannadapter 22 können diese jeweils nach rechts und links ans Grundgestellende in einen geschützten Bereich gefahren werden. Hier kann Hauptzeitparallel getauscht werden.

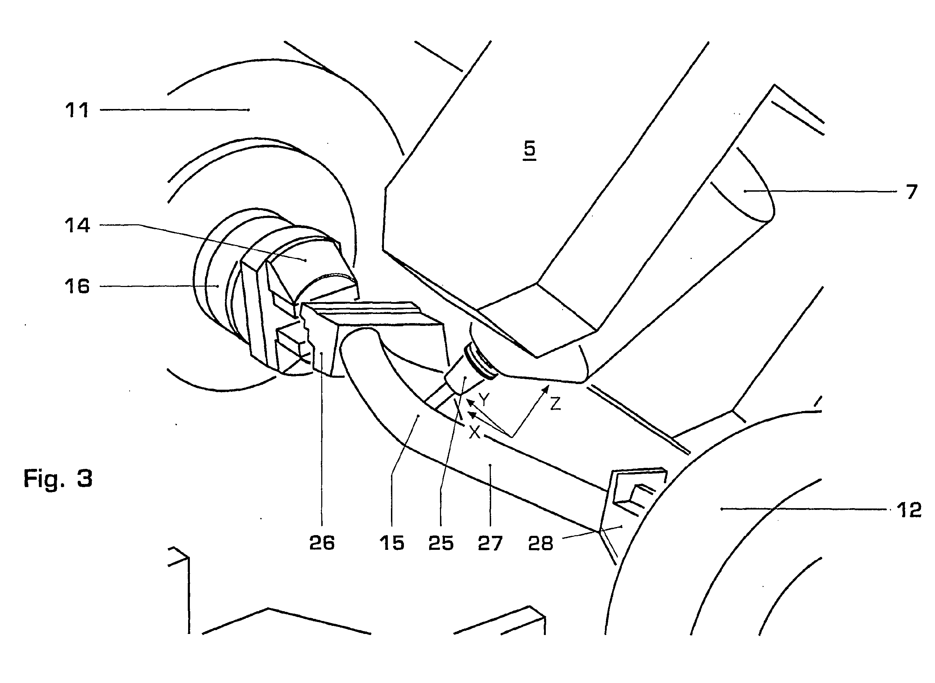

Fig. 3 zeigt einen detaillierten Ausschnitt aus dem Bearbeitungsbereich der Fräsmaschine während der Durchführung des ersten Bearbeitungsschrittes. Dabei ist erkennbar, wie der Rohling von den zwei Adaptern 14 an beiden Enden mit einem Formspannadapter gegriffen wird, und möglichst der gesamte zwischen den beiden Haltepunkten angeordnete Bereich über das Bearbeitungswerkzeug 25 bearbeitet wird.

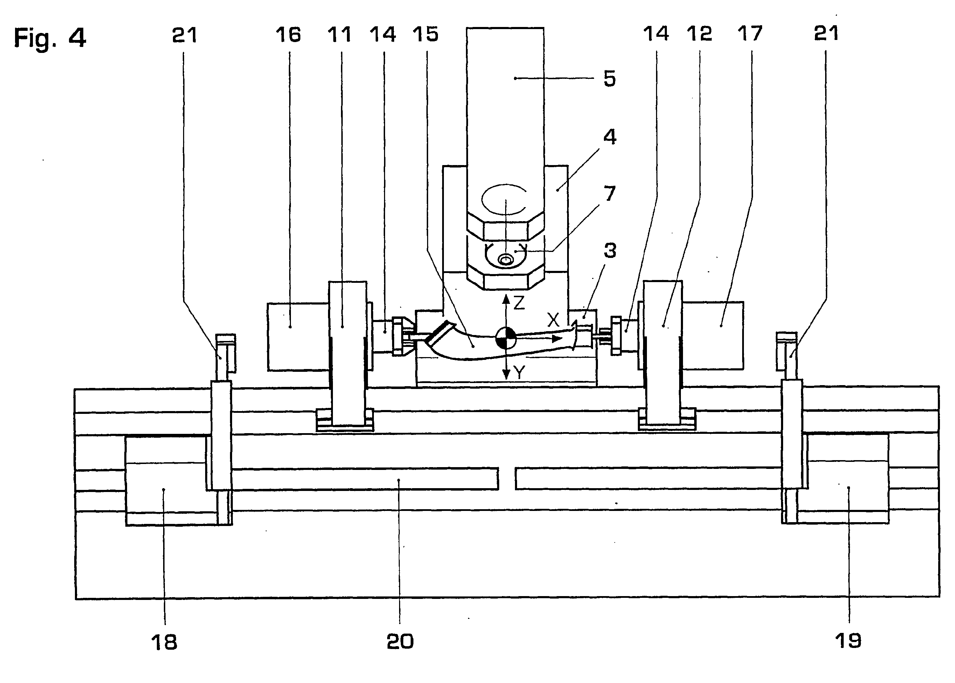

Fig. 4 zeigt die Stellung der Maschine bei Maschinennullpunkt, bzgl. welchem folgende Auslenkungen der einzelnen Schlitten und Einheiten vorgesehen sind. Dies für zwei verschiedene Typen der Maschine, einer kleinen Variante (HSTM800) und einer großen Variante (HSTM2000).

Die Werte für die Hauptachsen betragen dabei wie folgt:

| Achse | HSTM800 | HSTM2000 |
|---|---|---|
| X | +/-1050 mm | +/-1200 mm |
| Y | +/-310 mm | +/-310 mm |
| Z | +910mm | +910mm |
| | -100mm | -100mm |
| U | +150mm | +150mm |
| | -1100mm | - 1550 mm |
| V | -150mm | -150mm |
| | +1100mm | +1550mm |
| A/C | endlos | endlos |
| B | +/-95 Grad | +/-95 Grad |

Die Werte für die vorgeschaltete Vorrichtung mit den Wippen 21 betragen wie folgt: Linke Wippe

| Achse | HSTM800 | HSTM2000 |
|---|---|---|
| X' | + 1260 mm | + 1700 mm |
| | - 100 mm | - 100 mm |
| Z' | - 55 mm | - 55 mm |
| | +145mm | +145mm |
| B' | 0 | 0 |
| | + 50 Grad | + 50 Grad |
| A' | .+/-55 Grad | +/-55 Grad |

### Rechte Wippe

| Achse | HSTM800 | HSTM2000 |
|---|---|---|
| U' | - 1260 mm | - 1700 mm |
| | + 100 mm | + 100 mm |
| W' | - 55 mm | - 55 mm |
| | + 145 mm | + 145 mm |
| V' | 0 | 0 |
| | + 50 Grad | + 50 Grad |
| C' | +/-55 G rad | . +/-55 G rad |

Für die oben angegebenen Verschiebungsdimensionen weist eine derartige Fräsmaschine eine Größe von 6x9x4,5 m auf.

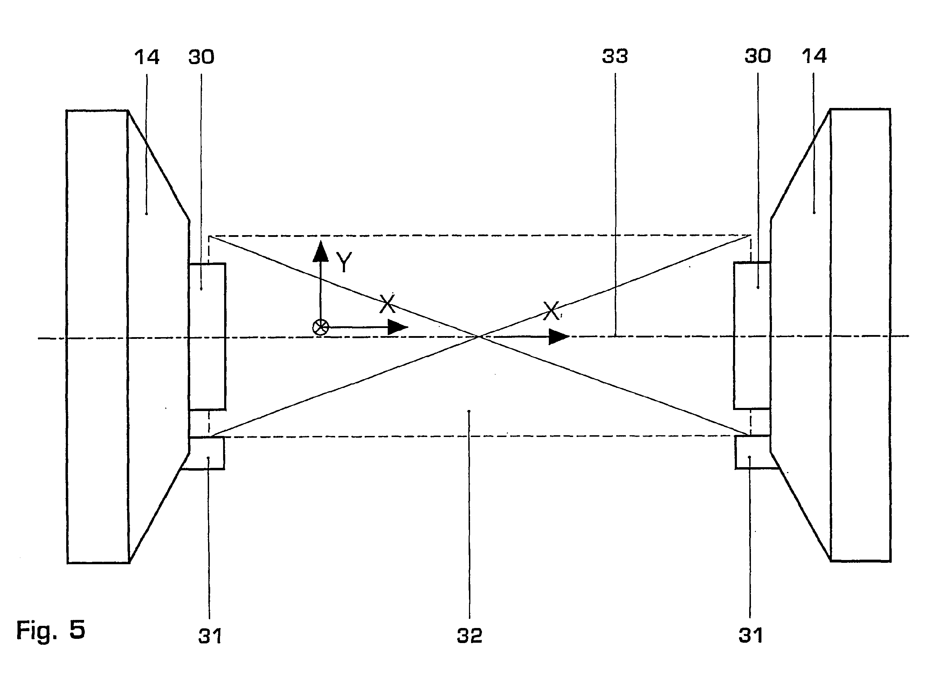

Anschließend soll nun das Verfahren zur Rundum-Bearbeitung eines Rohlings unter Verwendung einer Maschine, wie sie gerade beschrieben wurde, gezeigt werden. Dabei handelt es sich beispielhaft bei der zu erzielenden Gesamtform um eine Turbinenschaufel. Die Figuren 5 bis 7 zeigen dabei einzelne Abschnitte des Herstellungsverfahrens.

Als Rohmaterial finden dabei folgende Formen und Materialien Anwendung: Bars (Rechteckform, rund oder anderer beliebiger Querschnitt), Schmiede- oder Gussrohlinge, mit Materialquote versehen zur Qualitätssicherung (Zahlen, Buchstabenquote gelasert, geschlagen oder gespindelt).

Die zu erzielende Gesamtform weist dabei folgende Qualitäten auf:

| | | |
|---|---|---|
| Schaufelqualitäten: | Oberfläche | N4 - N5 |
| | Toleranzen | ± 0,002 mm |
| Abmaße: | Länge | > 120 mm |
| | | < 2400 mm |
| | Rotierender Durchmesser | > 50 mm |
| | | < 800 mm |
| | Gewicht: | >10kg |
| | | <400 kg |

### Beladen und Entladen der HSTM - Maschine:

Hierzu wird ein Rohling 1 beliebiger Form, per Hand und/oder mittels eines Handlingsystems, in die Schaufelfräsmaschine, die auch in einer flexiblen Zelle stehen kann, gebracht und nach der Bearbeitung durch die gleichen Transportsysteme wieder herausgeholt. Das Verfahren soll dabei mit Hilfe von zwei verschiedenen Rohlingen demonstriert werden, auf der einen Seite bei Verwendung eines Rohlings 1 in Form eines Rohmaterialbar (Punkt 1 der unten angegebenen Folge von Verfahrensschritten) und auf der anderen Seite bei Verwendung eines Rohlings 1 in Form einer Guss- oder Schmiedeschaufel (Punkt 2 der unten angegebenen Folge von Verfahrensschritten). Bei Verwendung eines Rohmaterialbar wird diese direkt mit einem Roboter eingespannt, wohingegen bei komplexen Teilen wie z. B. Guss- und Schmiedeschaufeln vorzugsweise der Rohling 1 zunächst in einen Adapter eingespannt wird, und anschließend der Rohling zusammen mit den Adapter mit einem Roboter in die Maschine eingeführt wird. Die eigentliche Bearbeitung eines derartigen Rohlings 1 wird anschließend unter Punkt 3 beschrieben.

### 1) Rohling 1 in Form eines Rohmaterialbar

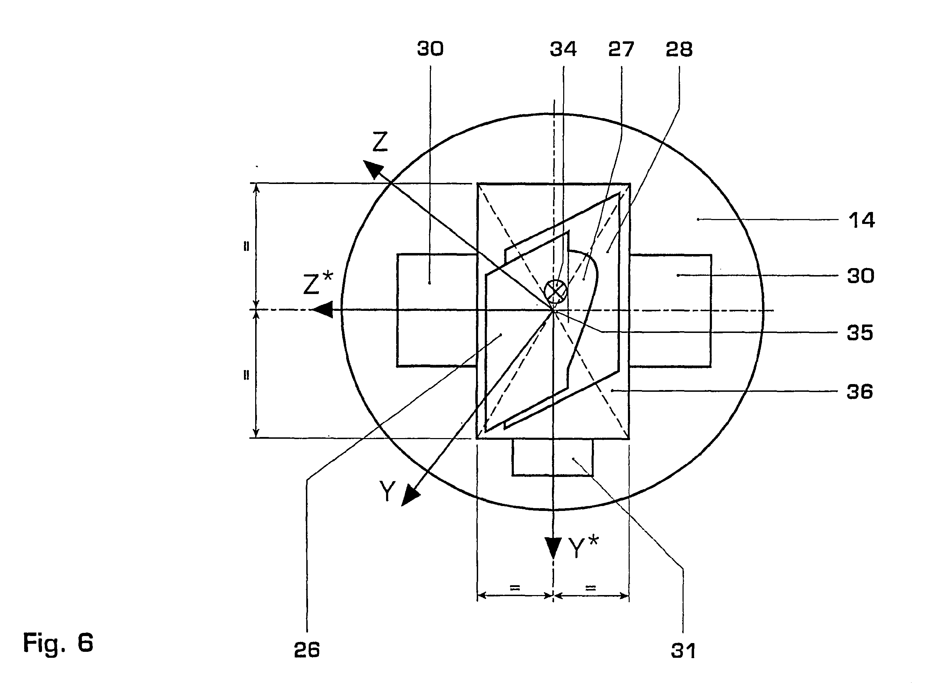

1.1) Der Rohmaterialbar wird auf ein Beladeband oder -rampe gelegt, mit der er zu einem Übergabeplatz an das Handlingsystem gelangt.
1.2) Hier wird der Rohmaterialbar zur definierten Übergabe ausgerichtet.
1.3) Hier wird der Rohmaterialbar mit einem Greifer geklemmt und mittels des Handlingsystems an eine Materiaicodelesestation gebracht.
1.4) Der Materialcode wird gelesen und an das Fertigungsleitsystem gemeldet.
1.5) Hierdurch erfolgt eine eindeutige Registrierung und Zuordnung des Rohmaterialbars zu einer Produktionsnummer.
1.6) Danach wird der Rohmaterialbar mittels des Handlingsystems zu der Fräsmaschine (HSTM) transportiert.
1.7) Der Rohmaterialbar wird dann in die Maschine zur Übergabe- bzw. Spannposition zwischen die beiden A-Achsen (NC-Rotationsachsen 16 und 17) gebracht.
1.8) Durch Verfahren des Handlingsystems in Richtung einer A-Achse 16 oder 17 und/oder durch das Verfahren der beiden NC-Linearachsen 11, 12, auf denen die Achsen 16, 17 montiert sind, gelangt der Rohmaterialbar in die/oder den Rohmaterialbar-Spannadapter 14. Nach dem Spannen des Rohmaterialbar-Spannadapters 14 (genaue Positionierung z. B. über einen Anschlag 31 und Fixierungen über Klemmbacken 30) verlässt das Handlingsystem den Maschinenarbeitsraum und übernimmt andere Aufgaben im FMS (was bedeutet diese Abkürzung?).(Fig. 5 und 6)
1.10) Die eigentlichen Fertigungsschritte (Pos. 3 weiter unten) beginnen.

### 2) Rohling 1 in Form einer Guss- oder Schmiedeschaufel

2.1) Bei den Schmiede- und Gussschaufeln wird außerhalb der Zelle auf einer speziell designierten Spannfläche ein am Fuß und/oder Kopf der Schaufel greifender Formspannadapter 14 auf einer Justier- und Spannvorrichtung, auf der die Schaufeln zum Zentrum ausgerichtet werden, geklemmt. Die Schaufel mit einseitigem oder beidseitigem Formspannadapter 14 wird dann in die Palettenstation auf eine Spannpalette eingeschleust.
2.1) Die beladene Palette wird danach in den Palettenbahnhof eingeschleust.
2.2) Zur Entnahme einer in den Formspannadapter gespannten Schaufel (GSS) muss diese zum Übergabeplatz an das Handlingsystem gebracht werden.
2.3) Hier wird vor der Entnahme der GSS deren Materialcode gelesen und an das Fertigungsleitsystern gemeldet.
2.4) Zur weiteren eindeutigen Erkennung dieser Schaufel wird durch ein Schreibsystern ein Chip beschriftet, der in einem der Formspannadapter 14 angebracht ist.
2.5) Hierdurch erfolgt eine eindeutige Registrierung und Zuordnung der GSS zu einer Produktionsnummer.
2.6) Danach wird der GSS durch die Greifer des Handlingsystems gegriffen und durch dieses zu der Fräsmaschine (HSTM) gebracht. (Vgl. dazu Fig. 3, in welcher der Spannadapter 14 als Formspannadapter für eine GSS dargestellt ist)
2.7) Der GSS wird dann in die Maschine zur Übergabe- bzw. Spannposition zwischen die beiden A-Achsen (NC-Rotationsachsen 11, 12) gebracht.
2.8) Durch Verfahren des Handlingsystems in Richtung einer A-Achse und /oder durch das Verfahren der beiden NC-Linearachsen 11, 12, werden die oder der Formspannadapter 14 in der oder die A-Achsen fixiert und geklemmt.
2.9) Nach dem Spannen der Formspannadapter 14 verlässt das Handlingsystem den Maschinenarbeitsraum und übernimmt andere Aufgaben im FMS. (Fig. 5 und 6)
2.10) Die eigentlichen Fertigungsschritte (Pos. 3 weiter unten) beginnen.

Der Rohling 1 ist nun über die beiden Spannadapter 14 zwischen den beiden Halterungsschlitten 11, 12, oder im Fall einer einseitigen Fassung durch nur einen Halterungsschlitten, gegriffen, wie dies in Fig. 5 und 6 dargestellt ist. Dabei liegen, wie in Fig. 6 sichtbar, der Schwerpunkt des Rohlings 35, welcher üblicherweise auf der Rotationsachse 33 der Halterungsschlitten 11, 12 liegt, und das Schaufel-Drehzentrum 34 meist nicht übereinander.

### 3) Eigentliche Fertigungsschritte in der Fräsmaschine

3.1) Im ersten Schritt innerhalb des ersten Bearbeitungsschrittes in der ersten Aufspannung werden alle Schruppoperationen im Rhombus, Kanal und Kopfbereich der gespannten Schaufel, bis auf ein definiertes Aufmaß zur Endkontur der Schaufel durchgeführt. Diese Operation kann durch konventionelles Fräsen oder durch Helirough durchgeführt werden. Hierzu werden die Schruppwerkzeuge in die UNI-Motorspindel. 7 mittels einem integrierten Werkzeugwechsler gespannt. Das Schruppfräsen selbst erfolgt mittels einem NC-Programm.
3.2) Im zweiten Schritt innerhalb des ersten Bearbeitungsschrittes wird dann mit den sogenannten Vorschichtwerkzeugen die bereits gespannte, schruppgefräste Schaufel, durch Spiral- (Helifräsen) und Linearfräsung auf ein konstantes Aufmaß (plus 0,2 bis 1,2 mm) zur Endkontur gebracht. Das Aufmaß ist schaufeltypabhängig. Bei verschiedenen Schaufeltypen kann dieser Schritt 3.2 auch entfallen.
3.3) Im dritten Schritt innerhalb des ersten Bearbeitungsschrittes wird dann mit den sogenannten Schichtwerkzeugen der komplette Schaufelkanal durch Spiralfräsen (Helifräsen) auf die gewünschte Kontur und Oberflächenqualität gebracht.
3.4) Im vierten Schritt innerhalb des ersten Bearbeitungsschrittes werden dann die Rhombusflächen am Kopf und Fuß incl. den Schaufeleinhäng- und Dichtpartien hergestellt, d.h. die Funktionsflächen der Fußgeometrie (H-Fuß, etc.) werden in diesem Schritt bereits hergestellt.
3.5) Danach erfolgt immer noch in der ersten Aufspannung eine Vermessung der Turbinenschaufel mittels eines Positions- bzw. Konturmeßsystemes (Taster- oder Lasermeßsysteme). Die Messdaten werden für die Dokumentation aufbereitet und wenn erforderlich Korrekturdaten für die nächste Turbienschaufelfertigung erstellt und an die Steuerung sowie an das Leitsystern zur Verrechnung im entsprechenden NC-Programm weitergeleitet.

Nach dieser Operation ist die Schaufel bis auf die beiden Stirnflächen am Kopf und Fuß fertig und der erste Bearbeitungsschritt zu Ende.
3.6) Um diese beiden Stirnflächen bearbeiten zu können, wird die Rombusstellung der Schaufel durch die beiden A-Rotationsachsen 16, 17 und Linearachsen U,V in eine definierte Übergabestellung (Drehwinkel der A-Achse) gebracht.
   Zur Übergabe selbst werden die beiden Wippen 21 in diese Position auf der Frontseite der Fräsmaschine gebracht. Danach werden die Wippen 21 (vgl. Fig. 7) durch ihre Schwenkachse B' respektive V' eingeschwenkt und dann zum Maschinenzentrum hin ausgefahren. Auf diesem Stößel ist eine Sonderspannvorrichtung 22 angebracht, mit der die Schaufel dann in speziellen Spann- und Aufnahmebacken hydraulisch gespannt wird.
   Zur genauen Positionierung kann die Sonderspannvorrichtung 22 durch eine NC-Kippachse A' respektive C' zusätzlich positioniert werden. Für die unterschiedlichen Schaufelgeometrien werden außerhalb des Arbeitsraumes, rechts und links an der Frontseite der Maschine, hauptzeitparallel die Sonderspann- und Aufnahmebacken 14 gewechselt. Ferner kann der Spannhub durch den Austausch des gestreckten Hydraulikzylinders vergrößert werden.
3.7) Nachdem dann die Schaufel in den beiden Sonderspannvorrichtungen 22 geklemmt sind, werden die beiden Formspannadapter 14 gelöst und die A-Achsen 11, 12 nach rechts und links außen in sogenannte Parkpositionen gebracht. Dies ist notwendig, um eine spätere Kollision mit der Frässpindel 7, sowie den Achsen Y, Z und B zu vermeiden.
3.8) Zur eigentlichen Bearbeitung der Fuß- und Kopfstirnflächen, werden, speziell bei langen Schaufeln, die beiden Wippen 21 nach rechts oder links gefahren, um genügend Freiraum für die UNI-Spindel 7, etc. zu erhalten.
3.9) Durch Eintauschen der benötigten Werkzeuge in die UNI-Spindel 7 werden dann diese beiden Flächen gegebenenfalls durch Drehen der B-Motorspindelachse um 90 Grad fertig gefräst.
3.10) Gegebenenfalls wird, wenn notwendig, eine Lageprüfung vorgenommen.
3.11) Nach einem Spülprozess, der alle Verschmutzungen von der Schaufel entfernt, werden ein- oder mehrere Positions- bzw. Konturmeßsysteme (Taster- oder Lasermeßsysteme) in die UNI-Motorspindel 7 gespannt. Ferner kann ein Oberflächenqualitätsmeßsystem hier eingewechselt werden. Mit diesen Geräten wird dann die Schaufel vermessen. Die Messdaten werden im Bedienrechner aufgearbeitet, um gegebenenfalls eine Korrekturbearbeitung vornehmen zu können. Des weiteren werden hier die Qualitätsdokumentationen erstellt.

Damit ist der zweite Bearbeitungsschritt in der zweiten Aufspannung beendet.
3.12) Anschließend wird die Schaufel durch Anheben der Wippe 21 zur Übergabestation an das Handlingsystem gekippt.
3.13) Danach wird die Schaufel mittels des gleichen Handlingsystems, gegebenenfalls nach vorherigem Greifertausch, an die Beschriftungsstation gebracht, um sie hier mit einem eindeutigen Code (meist Zahlencode) zu versehen.
3.14) Nach dieser Beschriftung gelangt die Schaufel in die Wasch- und Konservierungsmaschine, von der sie dann ausgeschleust wird.

### BEZUGSZEICHENLISTE

- 1: Grundgestell
- 2: hintere Führungsbahnen
- 3: Grundschlitteneinheit (X-Richtung der Frässpindel)
- 4: Y-Schlitteneinheit der Frässpindel
- 5: Z-Schlitteneinheit der Frässpindel
- 6: Frässpindel
- 7: UNI-Spindel
- 8: Rundachse von 7
- 9: Führungsbahnen für die Halterungsschlitten
- 10: Führungsbahnen für die beiden Wippen
- 11: linker Halterungsschlitten
- 12: rechter Halterungsschlitten
- 13: Spänekanal
- 14: Spannadapter
- 15: Werkstück
- 16: linke Schaufelrotationsachse
- 17: rechte Schaufelrotationsachse
- 18: linke Wippenschlitteneinheit
- 19: rechte Wippenschlitteneinheit
- 20: Rundführung
- 21: NC-Wippe
- 22: Sonderspannadapter
- 23: Greifarm von 22
- 24: Stellzylinder für 21
- 25: Bearbeitungswerkzeug
- 26: Kopf der Schaufel
- 27: Blattbereich der Schaufel
- 28: Fuß der Schaufel
- 30: Klemmbacke von 14
- 31: Anschlag für Rohling
- 32: Rohling
- 33: A- respektive C-Achse von Halterungsschlitten
- 34: Schaufel-Drehzentrum
- 35: Rohling-Schwerpunkt
- 36: Flachmaterial, überstehender Teil
- 37: Führungszylinder von 21
- 38: Drehachse von 21 (A'- respektive C'-Achse)
- 39: Stellzylinder von 23
- 40: Konturlinie des Rohlings
- 41: Fixiernasen von 22

## Patentansprüche

1. Verfahren zur Rundum-Bearbeitung eines Rohlings (32) mit einer Bearbeitungsmaschine wie beispielsweise einer Fräsmaschine (10),
**dadurch gekennzeichnet, dass**
der Rohling (32) in einem ersten Bearbeitungsschritt von wenigstens einem Spannadapter (14) gehalten wird und von der Bearbeitungsmaschine resp. der Fräsmaschine ein erster Bereich (26-28) in seine endgültige, der bestimmungsgemäßen Verwendung entsprechende Teilform gebracht wird, und
in einem zweiten Bearbeitungsschritt der teilbearbeitete Rohling von wenigstens einem Sonderspannadapter (22) im ersten, endgültig bearbeiteten Bereich (26-28) gehalten wird und der übrige Bereich (36) von derselben Bearbeitungsmaschine resp. Fräsmaschine in seine endgültige, der bestimmungsgemäßen Verwendung entsprechende Gesamtform gebracht wird.

2. Verfahren nach Anspruch 1, **dadurch gekennzeichnet, dass** es sich beim Rohling (32) um einen Rohling aus Metall oder einem Keramikwerkstoff in Form eines rechteckigen oder zylindrischen oder polyeder-förmigen, insbesondere bevorzugt quaderförmigen Blockes oder um einen Guss- oder Schmiederohling handelt.

3. Verfahren nach Anspruch 2, **dadurch gekennzeichnet, dass** der Rohling (32) noch keinem Vorbearbeitungsschritt unterzogen wurde.

4. Verfahren nach einem der vorhergehenden Ansprüche, **dadurch gekennzeichnet, dass** es sich bei der Teilform (26-28) um eine Form unter Belassung von unbearbeiteten Überständen (36) am Kopf- und am Fußteil handelt, wobei insbesondere bevorzugt bereits beim ersten Bearbeitungsschritt Einschnitte zwischen den Überständen (36) und der Teilform (26-28) vorgesehen werden.

5. Verfahren nach einem der vorhergehenden Ansprüche, **dadurch gekennzeichnet, dass** es sich bei der Gesamtform (26-28) um eine Turbinenschaufel oder um eine Leit- oder Laufschaufel handelt, und dass es sich bei der Teilform (26-28) um den Kopf der Schaufel (26), den Blattbereich der Schaufel (27) und den Fuß der Schaufel (28) handelt, wobei am Kopf (26) und am Fuß (28) nach dem ersten Bearbeitungsschritt vom Spannadapter (14) gefasste Überstände (36) stehenbleiben, welche anschließend im zweiten Bearbeitungsschritt entfernt werden.

6. Verfahren nach einem der vorhergehenden Ansprüche, **dadurch gekennzeichnet, dass** das Werkstück in beiden Bearbeitungsschritten von einer einzigen, in drei Raumrichtungen (X,Y,Z) verschiebbaren, und eine drehbare Spindel (7) zur Halterung eines Bearbeitungswerkzeugs (25) tragenden Frässpindel (6) bearbeitet wird.

7. Verfahren nach einem der vorhergehenden Ansprüche, **dadurch gekennzeichnet, dass** das Werkstück im ersten Bearbeitungsschritt in zwei den Rohling (32) kopf-und fußseitig greifenden Spannadaptern (14) gehalten wird, und der erste Bereich (26-28) im freiliegenden Bereich zwischen den beiden Spannadaptern (14) ausgearbeitet wird, wobei bevorzugt die Spannadapter (14) von zwei Halterungsschlitten (11, 12) derart geführt werden, dass das Werkstück in Bezug auf eine das Werkstück bearbeitende Frässpindel (6) entlang einer ersten Achse (U,V) verschoben und um diese erste Achse gedreht (A,C) werden kann, und wobei insbesondere bevorzugt die Drehung um die erste Achse (A,C) der beiden Spannadapter (14) unabhängig voneinander, synchron oder asynchron, mit ungleicher oder gleicher Rotationsgeschwindigkeit, geschehen kann.

8. Verfahren nach einem der vorhergehenden Ansprüche, **dadurch gekennzeichnet, dass** nach dem ersten Bearbeitungsschritt mit einer Frässpindel (6) der teilbearbeitete Rohling von wenigstens einem Sonderspannadapter (22) automatisch im ersten, endgültig bearbeiteten Bereich (26-28) gegriffen wird, der wenigstens eine Spannadapter (14) gelöst und aus dem Arbeitsbereich der Frässpindel (6) gefahren wird, und der teilbearbeitete Rohling unter Halterung im Sonderspannadapter (22) von der gleichen Frässpindel (6) in seine endgültige, der bestimmungsgemäßen Verwendung entsprechende Gesamtform gebracht wird, wobei insbesondere bevorzugt der wenigstens eine Sonderspannadapter (22) auf wenigstens einer, um eine zweite Achse (A',C') drehbaren Wippe (21) befestigt ist, welche Wippe (21) ihrerseits auf einer Wippenschlitteneinheit (18, 19) angeordnet ist, welche entlang einer dritten Achse (X',U') verschiebbar, und um diese dritte Achse drehbar (B',V') gelagert ist, wobei außerdem die Wippe (21) senkrecht zu dieser dritten Achse verschiebbar (W',Z') ist.

9. Verfahren nach einem der vorhergehenden Ansprüche, **dadurch gekennzeichnet, dass** die endgültige Gesamtform (68, 82) nach dem zweiten Bearbeitungsschritt gereinigt und/oder vermessen und/oder verpackt wird.

10. Verfahren nach einem der vorhergehenden Ansprüche, **dadurch gekennzeichnet, dass** es sich bei der endgültigen Gesamtform um eine Leitschaufel oder um Turbinenschaufel mit oder ohne Deckband handelt, insbesondere eine Turbinenschaufel mit einer Oberfläche im Bereich von N4 bis N5 bei Toleranzen von + - 0,002 mm, einer Länge von im Bereich von 120 bis 2400 mm bei einem rotierenden Durchmesser von 50 bis 400 mm und einem Gewicht von 10 bis 400 kg.

11. Bearbeitungsmaschine, wie beispielsweise Fräsmaschine, zur Durchführung eines Verfahrens nach einem der Ansprüche 1 bis 10, **gekennzeichnet durch** eine in drei Raumrichtungen verschiebbare Frässpindel (6), mit welcher das Werkstück in einem Bearbeitungsbereich bearbeitet werden kann, einen Halterungsschlitten (11, 12), mit welchem das Werkstück für den ersten Bearbeitungsschritt in Spannadaptern (14) gehaltert werden kann, und wenigstens eine Wippe (21), mit welcher das teilbearbeitete Werkstück mit wenigstens einem Sonderspannadapter (22) im ersten, endgültig bearbeiteten Bereich (26-28) des Werkstücks für den zweiten Bearbeitungsschritt gehaltert werden kann, wobei der wenigstens eine Sonderspannadapter (22) derart ausgebildet ist, dass er das in den Spannadaptern (14) gehaltene, teilbearbeitete Werkstück automatisch greifen kann, und wobei der wenigstens eine Halterungsschlitten (11, 12) aus dem Bearbeitungsbereich der Frässpindel (6) verschoben werden kann.

12. Bearbeitungsmaschine resp. Fräsmaschine nach Anspruch 11, **dadurch gekennzeichnet, dass** die Frässpindel (6) über eine auf hinteren, auf dem Grundgestell (1) angeordnete Führungsbahnen (2) in X-Richtung verschiebbare Grundschlitteneinheit (3), über eine auf dieser Grundschlitteneinheit in Y-Richtung verschiebbare Y-Schlitteneinheit (4), und über eine auf der Y-Schlitteneinheit (4) in Z-Richtung verschiebbare Z-Schlitteneinheit (5) sowie über eine in der Z-Schlitteneinheit (5) um eine Rundachse (8) drehbare, das Bearbeitungswerkzeug (25) tragende UNI-Spindel (7) verfügt.

13. Bearbeitungsmaschine resp. Fräsmaschine nach Anspruch 12, **dadurch gekennzeichnet, dass** die Frässpindel (6) entlang der X-Richtung um +/- 1000 bis 1200 mm, sowie entlang der Y-Richtung um +/- 300 bis 350 mm und entlang der Z-Richtung um + 900 bis 1000 und - 90 bis 110 mm verschoben werden kann, bezogen auf den Nullpunkt der Maschinenanordnung, und wobei insbesondere bevorzugt die UNI-Spindel (7) um +/- 90 bis 100 Grad um die Rundachse (8) drehbar ist.

14. Bearbeitungsmaschine resp. Fräsmaschine nach einem der Ansprüche 11, 12 oder 13, **dadurch gekennzeichnet, dass** zwei Halterungsschlitten (11, 12) angeordnet sind, welche das Werkstück im ersten Bearbeitungsschritt in zwei den Rohling (32) kopf- und fußseitig greifenden Spannadaptern (14) halten, wobei bevorzugt die Spannadapter (14) von den zwei Halterungsschlitten (11, 12) derart geführt werden, dass das Werkstück in Bezug auf die das Werkstück bearbeitende Frässpindel (6) entlang einer ersten Achse (U,V) verschoben und um diese erste Achse gedreht (A,C) werden kann, und wobei insbesondere bevorzugt die Drehung um die erste Achse (A,C) der beiden Spannadapter (14) unabhängig voneinander, synchron oder asynchron, mit ungleicher oder gleicher Rotationsgeschwindigkeit, geschehen kann, und wobei außerdem insbesondere bevorzugt die Verschiebungsachse (U,V) der Halterungsschlitten (11, 12) parallel zur X-Richtung der Frässpindel (6) gemäß Anspruch 12 angeordnet ist.

15. Bearbeitungsmaschine resp. Fräsmaschine nach Anspruch 14, **dadurch gekennzeichnet, dass** die Halterungsschlitten (11, 12) entlang der ersten Achse (U,V) um jeweils + respektive - 130 bis 170 mm und um jeweils - respektive + 1100 bis 1600 mm, bezogen auf den Nullpunkt der Maschinenanordnung, auf der Grundeinheit (1) verschoben werden können, und dass die Rotation um die erste Achse (A,C) endlos ausgebildet ist.

16. Bearbeitungsmaschine resp. Fräsmaschine nach einem der Ansprüche 11 bis 15, **dadurch gekennzeichnet, dass** der wenigstens eine Sonderspannadapter (22) auf wenigstens einer, um eine zweite Achse (A',C') drehbaren Wippe (21) befestigt ist, welche Wippe (21) ihrerseits auf einer Wippenschlitteneinheit (18, 19) angeordnet ist, welche entlang einer dritten Achse (X',U') verschiebbar, und um diese dritte Achse drehbar (B',V') gelagert ist, wobei außerdem die Wippe (21) senkrecht zu dieser dritten Achse verschiebbar (W',Z') ist.

17. Bearbeitungsmaschine resp. Fräsmaschine nach Anspruch 16, **dadurch gekennzeichnet, dass** die zweite Achse (A',C') der Wippe (21) parallel zur X-Richtung der Frässpindel (6) gemäß Anspruch 12 angeordnet ist.

18. Bearbeitungsmaschine resp. Fräsmaschine nach einem der Ansprüche 16 oder 17, **dadurch gekennzeichnet, dass** die dritte Achse (X',U') parallel zur X-Richtung der Frässpindel (6) gemäß Anspruch 12 angeordnet ist.

19. Bearbeitungsmaschine resp. Fräsmaschine nach einem der Ansprüche 16 bis 18, **dadurch gekennzeichnet, dass** die Wippe (21) um die zweite Achse (A',C') um +/-50 bis 60 Grad drehbar ist, die Wippenschlitteneinheiten (18, 19) entlang der dritten Achse (X',U') um + respektive -1200 bis 1800 mm und um - respektive + 80 bis 120 mm, bezogen auf den Nullpunkt der Maschinenanordnung, verschiebbar und um diese Achse (B',V') um + 50 bis 60 Grad, bezogen auf den Nullpunkt der Maschinenanordnung, drehbar ist, und dass die Wippe (21) senkrecht zur dritten Achse (W',Z') um - 50 bis 60 mm respektive + 140 bis 150 mm, bezogen auf den Nullpunkt der Maschinenanordnung, verschiebbar ist.

20. Verwendung einer Bearbeitungsmaschine nach einem der Ansprüche 11 bis 19 zur Herstellung einer Leit- oder Laufschaufel oder Turbinenschaufel, insbesondere einer Turbinenschaufel mit oder ohne Deckband mit einer Oberfläche im Bereich von N4 bis N5 bei Toleranzen von + - 0,002 mm, einer Länge von im Bereich von 120 bis 2400 mm bei einem rotierenden Durchmesser von 50 bis 400 mm und einem Gewicht von 10 bis 400 kg.

## Claims

1. Method of milling a blank (32) from all directions using at least one machine tool, such as a milling machine (10) for example, **characterized in that** the blank (32), in a first machining step, is held by at least one gripping adapter (14) and a first region (26-28) is given its final partial shape corresponding to the intended use by the machine tool or milling machine, and, in a second machining step, the partly machined blank is held by at least one special gripping adapter (22) in the first, finally machined region (26-28), and the remaining region (36) is given its final overall shape corresponding to the intended use by the same machine tool or milling machine.

2. Method according to Claim 1, **characterized in that** the blank (32) is a blank made of metal or a ceramic material in the form of a rectangular or cylindrical or polyhedral, in particular preferably parallelepiped-shaped, block or is a cast or forged blank.

3. Method according to Claim 2, **characterized in that** the blank (32) has not been subjected to any pre-machining step.

4. Method according to one of the preceding claims, **characterized in that** the partial shape (26-28) is a shape leaving unmachined projecting portions (36) at the tip part and at the root part, recesses being provided between the projecting portions (36) and the partial shape (26-28) in particular preferably during the first machining step.

5. Method according to one of the preceding claims, **characterized in that** the overall shape (26-28) involves a turbine blade or a guide or moving blade, and **in that** the partial shape (26-28) involves the tip of the blade (26), the airfoil region of the blade (27) and the root of the blade (28), projecting portions (36) gripped by the gripping adapter (14) being left at the tip (26) and at the root (28) after the first machining step, these projecting portions (36) then being removed in the second machining step.

6. Method according to one of the preceding claims, **characterized in that** the workpiece, in both machining steps, is machined by a single milling spindle (6) displaceable in three spatial directions (X, Y, Z) and carrying a rotatable spindle (7) for mounting a cutting tool (25).

7. Method according to one of the preceding claims, **characterized in that** the workpiece, in the first machining step, is held in two gripping adapters (14) gripping the blank (32) at the tip and the root, and the first region (26-28) is processed in the exposed region between the two gripping adapters (14), the gripping adapters (14) preferably being guided by two mounting slides (11, 12) in such a way that the workpiece, with respect to a milling spindle (6) machining the workpiece, can be displaced along a first axis (U, V) and rotated (A, C) about this first axis, and in particular it preferably being possible for the rotation to take place about the first axis (A, C) of the two gripping adapters (14) independently of one another, synchronously or asynchronously, with different or identical rotational speed.

8. Method according to one of the preceding claims, **characterized in that**, after the first machining step with a milling spindle (6), the partly machined blank is automatically gripped by at least one special gripping adapter (22) in the first, finally machined region (26-28), the at least one gripping adapter (14) is released and moved out of the working region of the milling spindle (6), and the partly machined blank, while being mounted in the special gripping adapter (22), is given its final overall shape corresponding to the intended use by means of the same milling spindle (6), the at least one special gripping adapter (22) in particular preferably being fastened to at least one rocker (21) which is rotatable about a second axis (A', C') and which in turn is arranged on a rocker slide unit (18, 19), which is displaceable along a third axis (X', U') and is mounted so as to be rotatable (B', V') about this third axis, the rocker (21) also being displaceable (w', Z') perpendicularly to this third axis.

9. Method according to one of the preceding claims, **characterized in that** the final overall shape (68, 82) is cleaned and/or measured and/or packed after the second machining step.

10. Method according to one of the preceding claims, **characterized in that** the final overall shape involves a guide blade or a turbine blade with or without shroud band, in particular a turbine blade having a surface within the range of N4 to N5 at tolerances of +/- 0.002 mm, a length within a range of 120 to 2400 mm with a rotating diameter of 50 to 400 mm and a weight of 10 to 400 kg.

11. Machine tool, such as a milling machine for example, for carrying out a method according to one of Claims 1 to 10, **characterized by** a milling spindle (6) which is displaceable in three spatial directions and with which the workpiece can be machined in a machining region, a mounting slide (11, 12), with which the workpiece, for the first machining step, can be mounted in gripping adapters (14), and at least one rocker (21), with which the partly machined workpiece can be mounted by means of at least one special gripping adapter (22) in the first, finally machined region (26-28) of the workpiece for the second machining step wherein the at least one special gripping adapter (22) is designed in such a way that it can automatically grip the workpiece partly machined in the gripping adapters (14), and wherein the at least one mounting slide (11, 12) can be displaced out of the machining region of the milling spindle (6).

12. Machine tool or milling machine according to Claim 11, **characterized in that** the milling spindle (6) has a base slide unit (3) displaceable in the X direction on rear guideways (2) arranged on the base frame (1), a Y slide unit displaceable on this base slide unit in the Y direction, and a Z slide unit (5) displaceable on the Y slide unit (4) in the Z direction, and also a UNI spindle (7) rotatable about a rotary axis (8) in the Z slide unit (5) and carrying the cutting tool (25).

13. Machine tool or milling machine according to Claim 12, **characterized in that** the milling spindle (6) can be displaced in the X direction by +/- 1000 to 1200 mm and in the Y direction by +/- 300 to 350 mm and in the Z direction by + 900 to 1000 and - 90 to 110 mm, relative to the zero point of the machine arrangement, the UNI spindle (7) in particular preferably being rotatable by +/- 90 to 100 degrees about the rotary axis (8).

14. Machine tool or milling machine according to one of Claims 11, 12 or 13, **characterized in that** two mounting slides (11, 12) are arranged which hold the workpiece in the first machining step in two gripping adapters (14) gripping the blank (32) at the tip and the root, the gripping adapters (14) preferably being guided by the two mounting slides (11, 12) in such a way that the workpiece, with respect to the milling spindle (6) machining the workpiece, can be displaced along a first axis (U, V) and rotated (A, C) about this first axis, and in particular it preferably being possible for the rotation to take place about the first axis (A, C) of the two gripping adapters (14) independently of one another, synchronously or asynchronously, with different or identical rotational speed, and, in addition, the displacement axis (U, V) of the mounting slides (11, 12) in particular preferably being arranged parallel to the X direction of the milling spindle (6) according to Claim 12.

15. Machine tool or milling machine according to Claim 14, **characterized in that** the mounting slides (11, 12) can be displaced on the base unit (1) along the first axis (U, V) by in each case + respectively - 130 to 170 mm and by in each case - respectively + 1100 to 1600 mm, relative to the zero point of the machine arrangement, and **in that** the rotation about the first axis (A, C) is designed to be endless.

16. Machine tool or milling machine according to one of Claims 11 to 15, **characterized in that** the at least one special gripping adapter (22) is fastened to at least one rocker (21) which is rotatable about a second axis (A', C') and which in turn is arranged on a rocker slide unit (18, 19), which is displaceable along a third axis (X', U') and is mounted so as to be rotatable (B', V') about this third axis, the rocker (21) also being displaceable (W', Z') perpendicularly to this third axis.

17. Machine tool or milling machine according to Claim 16, **characterized in that** the second axis (A', C') of the rocker (21) is arranged parallel to the X direction of the milling spindle (6) according to Claim 12.

18. Machine tool or milling machine according to either of Claims 16 and 17, **characterized in that** the third axis (X', U') is arranged parallel to the X direction of the milling spindle (6) according to Claim 12.

19. Machine tool or milling machine according to one of Claims 16 to 18, **characterized in that** the rocker (21) is rotatable about the second axis (A', C') by +/- 50 to 60 degrees, the rocker slide units (18, 19) are displaceable along the third axis (X', U') by + respectively - 1200 to 1800 mm and by - respectively + 80 to 120 mm, relative to the zero point of the machine arrangement, and are rotatable about this axis (B', V') by + 50 to 60 degrees, relative to the zero point of the machine arrangement, and **in that** the rocker (21) is displaceable perpendicularly to the third axis (W', Z') by - 50 to 60 mm respectively + 140 to 150 mm, relative to the zero point of the machine arrangement.

20. Use of a machine tool according to one of Claims 11 to 19 for producing a guide or moving blade or a turbine blade, in particular a turbine blade with or without a shroud band, having a surface within the range of N4 to N5 with tolerances of +/- 0.002 mm, a length within the range of 120 to 2400 mm, with a rotating diameter of 50 to 400 mm, and a weight of 10 to 400 kg.

## Revendications

1. Procédé d'usinage circulaire d'une ébauche (32) avec une machine d'usinage comme par exemple une fraiseuse (10), **caractérisé en ce que** l'ébauche (32) est, dans une première étape d'usinage, maintenue par au moins un adaptateur de serrage (14) et une première zone (26-28) est amenée, par la machine d'usinage respectivement par la fraiseuse, à sa forme partielle définitive correspondant à l'utilisation envisagée et, dans une deuxième étape d'usinage, l'ébauche partiellement usinée est maintenue par au moins un adaptateur de serrage spécial (22) dans la première zone définitivement usinée (26-28) et la zone restante (36) est amenée par la même machine d'usinage respectivement la même fraiseuse à sa forme globale finale, correspondant à l'utilisation envisagée.

2. Procédé selon la revendication 1, **caractérisé en ce que** l'ébauche (32) est une ébauche en métal ou en un matériau céramique sous la forme d'un bloc rectangulaire ou cylindrique ou polyédrique, en particulier de préférence parallélépipédique ou une ébauche coulée ou forgée.

3. Procédé selon la revendication 2, **caractérisé en ce que** l'ébauche (32) n'a encore été soumise à aucune étape de préusinage.

4. Procédé selon l'une quelconque des revendications précédentes, **caractérisé en ce que** la forme partielle (26-28) est une forme qui laisse des zones débordantes non usinées (36) à la tête et au pied, dans lequel il est prévu de façon particulièrement préférée des entailles entre les zones débordantes (36) et la forme partielle (26-28) déjà lors de la première étape d'usinage.

5. Procédé selon l'une quelconque des revendications précédentes, **caractérisé en ce que** la forme globale (26-28) est une aube de turbine ou une aube directrice ou mobile, et **en ce que** la forme partielle (26-28) est une tête de l'aube (26), la partie de pale de l'aube (27) et le pied de l'aube (28), dans lequel il reste à la tête (26) et au pied (28), après la première étape d'usinage, des zones débordantes (36) saisies par l'adaptateur de serrage (14), qui sont ensuite enlevées lors de la deuxième étape d'usinage.

6. Procédé selon l'une quelconque des revendications précédentes, **caractérisé en ce que** la pièce est usinée dans les deux étapes d'usinage par une seule broche porte-fraise (6) mobile dans trois directions spatiales (X, Y, Z) et portant une broche pivotante (7) destinée à supporter l'outil d'usinage (25).

7. Procédé selon l'une quelconque des revendications précédentes, **caractérisé en ce que** la pièce est maintenue, dans la première étape d'usinage, dans deux adaptateurs de serrage (14) saisissant l'ébauche (32) en tête et au pied, et la première zone (26-28) est usinée dans la zone libre entre les deux adaptateurs de serrage (14), dans lequel les adaptateurs de serrage (14) sont de préférence guidés par deux chariots de support (11, 12) de telle manière que la pièce puisse être déplacée le long d'un premier axe (U, V) par rapport à une broche porte-fraise usinant la pièce et puisse tourner autour de ce premier axe (A, C), et dans lequel la rotation peut s'effectuer de manière particulièrement préférée autour du premier axe (A, C) des deux adaptateurs de serrage (14) indépendamment l'un de l'autre, de manière synchrone ou asynchrone, avec une vitesse de rotation identique ou différente.

8. Procédé selon l'une quelconque des revendications précédentes, **caractérisé en ce qu'**après la première étape d'usinage avec une broche porte-fraise (6), l'ébauche partiellement usinée est saisie automatiquement par au moins un adaptateur de serrage spécial (22) dans la première zone définitivement usinée (26-28), le au moins un adaptateur de serrage (14) est desserré et est conduit hors de la zone de travail de la broche porte-fraise (6), et l'ébauche partiellement usinée est amenée par la même broche porte-fraise (6) à sa forme globale définitive correspondant à l'utilisation envisagée, tout en étant maintenue dans l'adaptateur de serrage spécial (22), dans lequel le au moins un adaptateur de serrage spécial (22) est d'une manière particulièrement préférée fixé sur au moins une bascule (21) pivotant autour d'un deuxième axe (A', C'), bascule (21) qui est à son tour disposée sur une unité de chariot de bascule (18, 19) qui est mobile le long d'un troisième axe (X', U') et est montée à rotation autour de ce troisième axe (B', V'), dans lequel la bascule (21) est par ailleurs mobile perpendiculairement à ce troisième axe (W', Z').

9. Procédé selon l'une quelconque des revendications précédentes, **caractérisé en ce que** la forme globale définitive est nettoyée et/ou mesurée et/ou emballée après la deuxième étape d'usinage.

10. Procédé selon l'une quelconque des revendications précédentes, **caractérisé en ce que** le forme globale définitive est une aube directrice ou une aube de turbine avec ou sans anneau de renforcement, en particulier une aube de turbine avec une surface de l'ordre de N4 à N5 avec des tolérances de ± 0,002 mm, une longueur de l'ordre de 120 à 2400 mm pour un diamètre tournant de 50 à 400 mm et un poids de 10 à 400 kg.

11. Machine d'usinage, comme par exemple fraiseuse, pour la mise en oeuvre d'un procédé selon l'une quelconque des revendications 1 à 10, **caractérisée par** une broche porte-fraise (6) mobile dans trois directions spatiales, avec laquelle la pièce peut être usinée dans une zone d'usinage, un chariot de support (11, 12) avec lequel la pièce peut être supportée dans des adaptateurs de serrage (14) pour la première étape d'usinage, et au moins une bascule (21) avec laquelle la pièce partiellement usinée peut être supportée avec au moins un adaptateur de serrage spécial (22) dans la première zone de la pièce usinée définitivement (26-28) pour la deuxième étape d'usinage, dans laquelle le au moins un adaptateur de serrage spécial (22) est configuré de telle manière qu'il puisse saisir automatiquement la pièce partiellement usinée maintenue dans les adaptateurs de serrage (14) et dans laquelle le au moins un chariot de support (11, 12) peut être écarté hors de la zone d'usinage de la broche porte-fraise (6).

12. Machine d'usinage respectivement fraiseuse selon la revendication 11, **caractérisée en ce que** la broche porte-fraise (6) dispose d'une unité de chariot de base (3) mobile en direction X sur des guides arrière (2) disposés sur le châssis de base (1), d'une unité de chariot Y (4) mobile en direction Y sur cette unité de chariot de base, et d'une unité de chariot Z (5) mobile en direction Z sur l'unité de chariot Y (4), ainsi que d'une broche UNI (7) portant l'outil d'usinage (25), pouvant tourner autour d'un axe de rotation (8) dans l'unité de chariot Z (5).

13. Machine d'usinage respectivement fraiseuse selon la revendication 12, **caractérisée en ce que** la broche porte-fraise (6) peut être déplacée de ± 1000 à 1200 mm le long de la direction X, ainsi que de ± 300 à 350 mm le long de la direction Y et de + 900 à 1000 et de - 90 à 110 mm le long de la direction Z, par rapport au point zéro du dispositif de la machine, et dans laquelle la broche UNI (7) peut de manière particulièrement avantageuse tourner de ± 90 à 100 degrés autour de l'axe de rotation (8).

14. Machine d'usinage respectivement fraiseuse selon l'une quelconque des revendications 11, 12 ou 13, **caractérisée en ce qu'**elle comporte deux chariots de support (11, 12) qui maintiennent la pièce dans la première étape d'usinage dans deux adaptateurs de serrage (14) saisissant l'ébauche (32) à la tête et au pied, dans laquelle les adaptateurs de serrage (14) sont de préférence guidés par les deux chariots de support (11, 12) de telle manière que la pièce soit déplacée le long d'un premier axe (U, V) par rapport à la broche porte-fraise (6) usinant la pièce et puisse tourner autour de ce premier axe (A, C), et dans laquelle la rotation autour du premier axe (A, C) des deux adaptateurs de serrage (14) puisse s'effectuer indépendamment l'un de l'autre, de façon synchrone ou asynchrone, avec une vitesse de rotation identique ou différentes, et dans laquelle par ailleurs l'axe de déplacement (U, V) des chariots de support (11, 12) est de manière particulièrement préférée disposé parallèlement à la direction X de la broche porte-fraise (6), selon la revendication 12.

15. Machine d'usinage respectivement fraiseuse selon la revendication 14, **caractérisée en ce que** les chariots de support (11, 12) peuvent être déplacés sur l'unité de base (1) le long du premier axe (U, V) chaque fois d'environ + respectivement - 130 à 170 mm et chaque fois d'environ - respectivement + 1100 à 1600 mm, par rapport au point zéro du dispositif de la machine, et **en ce que** la rotation autour du premier axe (A, C) est infinie.

16. Machine d'usinage respectivement fraiseuse selon l'une quelconque des revendications 11 à 15, **caractérisée en ce que** le au moins un adaptateur de serrage spécial (22) est fixé sur au moins une bascule (21) pivotant autour d'un deuxième axe (A', C'), bascule (21) qui est à son tour disposée sur une unité de chariot de bascule (18, 19) qui est mobile le long d'un troisième axe (X', U') et est montée à rotation autour de ce troisième axe (B', V'), dans laquelle par ailleurs la bascule (21) est mobile perpendiculairement à ce troisième axe (W', z').

17. Machine d'usinage respectivement fraiseuse selon la revendication 16, **caractérisée en ce que** le deuxième axe (A', C') de la bascule (21) est disposé parallèlement à la direction X de la broche porte-fraise (6) selon la revendication 12.

18. Machine d'usinage respectivement fraiseuse selon l'une quelconque des revendications 16 ou 17, **caractérisée en ce que** le troisième axe (X', U') est disposé parallèlement à la direction X de la broche porte-fraise (6) selon la revendication 12.

19. Machine d'usinage respectivement fraiseuse selon l'une quelconque des revendications 16 à 18, **caractérisée en ce que** la bascule (21) peut tourner autour du deuxième axe (A', C') de ± 50 à 60 degrés, les unités de chariot de bascule (18, 19) peuvent se déplacer le long du troisième axe (X', U') d'environ + respectivement - 1200 à 1800 mm et d'environ - respectivement + 80 à 120 mm, par rapport au point zéro du dispositif de la machine, et peuvent tourner autour de cet axe (B', V') d'environ + 50 à 60 degrés, par rapport au point zéro du dispositif de la machine, et **en ce que** la bascule (21) peut se déplacer perpendiculairement au troisième axe (W', Z') d'environ - 50 à 60 mm respectivement + 140 à 150 mm, par rapport au point zéro du dispositif de la machine.

20. Utilisation de la machine d'usinage selon l'une quelconque des revendications 11 à 19 pour la fabrication d'une aube directrice ou d'une aube mobile ou d'une aube de turbine, en particulier d'une aube de turbine avec ou sans anneau de renforcement, avec une surface de l'ordre de N4 à N5 avec des tolérances de ± 0,002 mm, une longueur de l'ordre de 120 à 2400 mm avec un diamètre tournant de 50 à 400 mm et un poids de 10 à 400 kg.
